# EUROPEAN PATENT SPECIFICATION

(11) **EP 0 547 795 B1**
(45) Date of publication and mention of the grant of the patent: **01.05.1996**
(21) Application number: 92310889.8
(22) Date of filing: 30.11.1992
(51) Int. Cl.: B62L 3/08

(54) **Braking device for a cycle**
Fahrradbremsvorrichtung
Dispositif de freinage pour bicyclette

(30) Priority: 16.12.1991 JP 114177/91 U
(43) Date of publication of application: 23.06.1993
(73) Proprietor: Tsuchie, Kimihiro, Kita-Ku Kyoto-Shi (JP)
(72) Inventor: Tsuchie, Kimihiro, Kita-Ku Kyoto-Shi (JP)
(74) Representative: Gura, Henry Alan

(56) References cited:
- FR-A- 2 495 564
- GB-A- 2 175 657
- US-A- 4 057 127

## Description

The present invention relates to improvement of a braking device for a cycle wherein a plurality of braking systems can be actuated simultaneously by manipulation of a single brake lever.

Simultaneous braking devices for bicycles are known, for example from GB 2175657A, in which two independent lines of brake wires are divided into a total of four parts and each end thereof is connected to a movable plate.

Hitherto, it has been taken as preferable to have braking of the front wheel effected later than that of the rear wheel. In the aforementioned prior art attempts were made for delaying braking of the front wheel such as providing a backlash for the connection between the wire and the movable plate. For that, however, it was necessary to first adjust either brake before adjusting the other brake with its stroke matched, this resulting in decrease of the wire's effective stroke. And this gave rise to a problem that it was then difficult to adjust the gap between the wheel and the brake shoe to be correct for both wheels. Such adjustment was extremely difficult when there were such factors as loosening of the connection with the moving plate, tolerances in the dimensions of the parts involved, deformation of the wheels et cetera, these possibly resulting in failure of braking or of a release thereof. Worse, with the wire divided into four, there resulted an increase of the number of the parts involved as well as of the man-hours required for assembly and also a relative increase in size of the movable plate which affected the aesthetic quality thereof.

A braking device for a cycle has been proposed in FR 2495564 in which the two brake wires from respective brake levers are secured side by side in a clamp that is located in a frame through which the wires pass. Although this interconnection of the wires makes it possible to operate both brakes when one brake lever is pulled, the action on both brakes is not simultaneous. Both brake levers must still be operated to actuate the brakes simultaneously and equally.

In accordance with the present invention, a braking device is provided comprising a plurality of wire brake systems in each of which the brake wire is led from its brake lever through an outer tube to a respective brake, and means interconnect the respective brake systems so that when one or other of the brake levers is manipulated all the brake systems are actuated, the interconnecting means comprising an outer tube relay inserted intermediate said outer tubes for the respective brake systems to divide each outer tube, the divided ends of the outer tubes being connected thereto, and the brake wires being connected together in mutual contact by fixing means within said outer tube relay.

Such a construction can be arranged to allow independent adjustment of each brake system before fixing together both brake wires, hence it can be ensured that each brake wire is effectively displaceable and each brake can be actuated without fail. Since the size of the outer tube relay need only be sufficient for securing together the brake wires, there is no problem of it being so bulky as to be visually obtrusive. Also, such a braking device can be easily arranged to be attached to a bicycle already in use.

A preferred embodiment of the invention will now be described with reference to the accompanying drawings, in which:
Fig. 1 is a perspective view showing an embodiment of the present invention;
Fig. 2 is a perspective view of an outer tube relay of the embodiment in a different shape; and
Fig. 3 is a perspective view of a fixing means used in the embodiment.

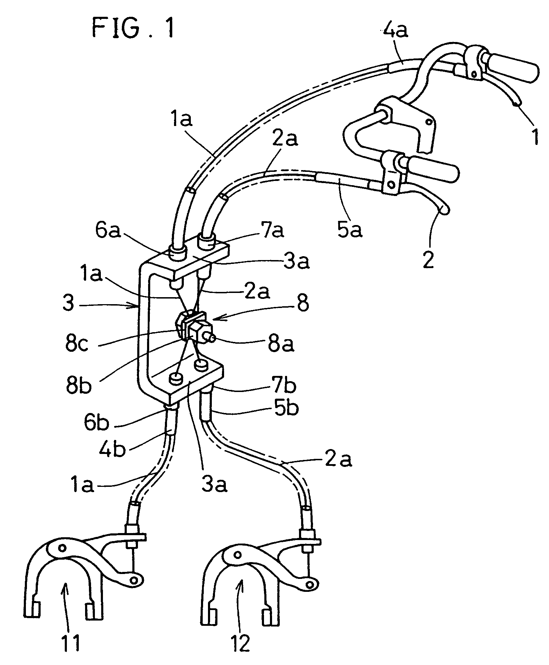

In Fig. 1 reference numeral 1 designates a brake lever for a front wheel brake, 1a a brake wire, 11 a brake for the front wheel, 2 a brake lever for a rear wheel brake, 2a another brake wire, 12 a brake for the rear wheel, the brake lever 1 and the brake 11 being connected by the wire 1a and the brake lever 2 and the brake 12 being connected by the wire 2a.

Reference numeral 3 designates an outer tube relay, 4a and 4b outer tubes through which a wire 1a passes and 5a, 5b outer tubes through which a wire 2a passes. The outer tube relay 3 is a rectangular plate with both end portions thereof bent at right angles, and the outer tubes 4a, 4b, 5a and 5b are connected to the bent portion 3a of the outer tube relay 3 via the outer tube receivers 6a, 6b, 7a and 7b connected to the relay 3 respectively. The relay 3 is, therefore, a means for connecting the outer tubes 4a and 4b on the one hand and the outer tubes 5a and 5b on the other, and the wires 1a and 1b are set to pass through the inside of this relay 3.

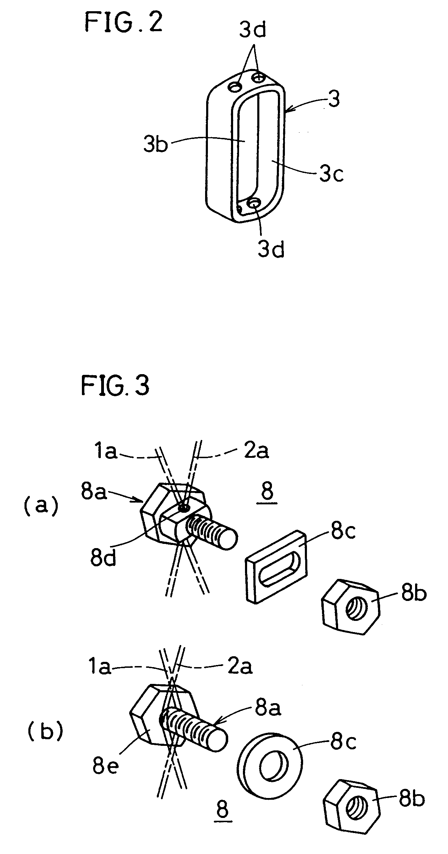

The outer tube relay 3 may as well be a lidless box-like one with its continuous side wall 3c around a bottom 3b as shown in Fig. 2. This alternative has an advantage of being higher is strength compared with that of Fig. 1. Reference numeral 3d designates each one connecting hole for the outer tube.

Reference numeral 8 designates a fixing means for fixing the wires 1a and 2a together inside the relay 3. As shown in Fig. 3(a), it is made up of a bolt 8a, a nut 8b and a pressing plate 8c having a rectangular hole therein and the bolt 8a has formed inward of its head a boss whose sectional shape corresponds to that of the hole in the pressing plate 8c and this boss that a through hole 8d in the diametric direction. The wires 1a and 2a are to be set through this hole 8d before tightening up the nut 8b so that the wires 1a and 2a are fixed securely. The construction described above is a mere example and it is also possible to use a fixing means of different construction such as shown in Fig. 3(b) the bolt 8a has no boss and the wires 1a and 2a are set on the belt shank and a nut 8b is screwed up to have the wires 1a and 2a fixed together between the head 8e and the pressing plate 8c.

Fixing of the wires 1a and 2a by the use of the fixing means 8 is done after connecting the wires 1a and 2a between the brake lever 1 and the brake 11 or the brake lever 2 and the brake 12 respectively and subsequent adjustment of the wire length et cetera. Since the adjustment can then the done independently, the brakes for the front and rear wheels can be adjusted optimally without affecting that of the brake for the other wheel and adjustment of the gap between either wheel and its brake shoe is therefore easily made.

With the brake of the construction as described above when, for example, the brake lever 1 is manipulated, the wire 1a is pulled and the brake 11 is actuated. Since, however, the wires 1a and 2a are fixed together inside the relay 3, the wire 2a is pulled similarly and the brake 12 is actuated, too. The same applies when the brake lever 2 is manipulated. Since the brakes 11 and 12 for both wheels are thus linked, both front and rear wheels are braked simultaneously, safely and quickly, even when only either brake lever is manipulable.

The actuating conditions of the front and rear wheels depend on the independent adjustment done before fixing of the wires, and proper actuation of the brakes is feasible. If fixing of the wires by means of the fixing means 8 should be erroneous, the consequence is only a failure to attain simultaneous braking, this does not interfere with the individual function of the brakes, and safety is thus ensured.

Further advantages of the illustrated construction are that it requires relatively few parts and can be quickly assembled.

It will be understood that the braking device described is also applicable to tricycles, for example, and the term "bicycle" as used in the specification should therefore be interpreted to include all cycles with two or more wheels.

## Claims

1. A braking device for a cycle provided with a plurality of wire brake systems in each of which the brake wire (1a;2a) is led from a brake lever (1;2) through an outer tube (4a,4b;5a,5b) to a respective brake, and means (8) interconnect the brake systems so that when one or other of the brake levers is manipulated, all the brake systems are actuated, characterised in that the interconnecting means comprises:
an outer tube relay (3) inserted intermediate said outer tubes (4a,4b;5a,5b) for the respective brake systems divides each outer tube and the divided ends of each said outer tube are connected to said relay, and that
said brake wires (1a,2a) are connected together in mutual contact by fixing means (8) within said outer tube relay.

2. A braking device according to claim 1, wherein there are two said brake systems operable on the front and rear wheels respectively of the cycle.

3. A braking device according to claim 1 or claim 2, wherein said outer tube relay (3) is a rectangular plate with opposite end portions (3a) bent over.

4. A braking device according to claim 1 or claim 2, wherein said outer tube relay (3) is box-shaped having a side wall (3c) extending substantially continuously around a bottom wall (3b).

5. A braking device according to any one of the preceding claims, wherein said fixing means (8) has formed therein a transverse aperture (8d) in which said brake wires (1a,2a) are located in mutual contact and clamped.

6. A braking device according to any one of claims 1 to 4, wherein said fixing means (8) comprises a pair of mutually threaded elements (8a,8b) having opposed end faces between which said brake wires (1a,2a) are clamped in mutual contact by tightening the threaded connection between the elements.

## Patentansprüche

1. Bremsvorrichtung für ein Fahrrad, das mit einer Vielzahl von Drahtbremssystemen ausgestattet ist, bei denen der Bremsdraht (1a;2a) jeweils von einem Bremshebel (1;2) durch einen Außenschlauch (4a,4b;5a,5b) zu einer jeweiligen Bremse geführt ist, und Mittel (8) die Bremssysteme miteinander verbinden, sodaß, wenn der eine oder der andere Bremshebel betätigt wird, alle Bremssysteme betätigt werden, dadurch gekennzeichnet, daß das Verbindungsmittel umfaßt:
ein Außenschlauchrelais (3), das zwischen den Außenschläuchen (4a,4b;5a,5b) eingefügt ist, jeden Außenschlauch teilt und die geteilten Enden eines jeden Außenschlauchs mit dem Relais verbunden sind, und daß
die Bremsdrähte (1a,2a) in gegenseitigem Kontakt durch Befestigungsmittel (8) innerhalb des Außenschlauchrelais miteinander verbunden sind.

2. Bremsvorrichtung nach Anspruch 1, worin es zwei Bremssysteme gibt, die am Vorder- bzw. am Hinterrad des Fahrrads angreifen.

3. Bremsvorrichtung nach Anspruch 1 oder 2, worin das Außenschlauchrelais (3) eine rechteckige Platte mit umgebogenen gegenüberliegenden Endabschnitten (3a) ist.

4. Bremsvorrichtung nach Anspruch 1 oder 2, worin das Außenschlauchrelais (3) kastenförmig ist und eine Seitenwand (3c) aufweist, die sich im wesentlichen kontinuierlich um eine Bodenwand (3b) erstreckt.

5. Bremsvorrichtung nach einem der vorangegangenen Ansprüche, worin im Befestigungsmittel (8) eine quergerichtete Öffnung (8d) ausgebildet ist, in der sich die Bremsdrähte (1a,2a) in Kontakt zueinander und festgeklemmt befinden.

6. Bremsvorrichtung nach einem der Ansprüche 1 bis 4, worin das Befestigungsmittel (8) ein Paar miteinander in Gewindeingriff bringbare Elemente (8a,8b) umfaßt, die gegenüberliegende Endflächen aufweisen, zwischen denen die Bremsdrähte (1a,2b) in gegenseitigem Kontakt festgeklemmt werden, indem die Gewindeverbindung zwischen den Elementen festgezogen wird.

## Revendications

1. Dispositif de freinage pour une bicyclette équipée d'une pluralité de systèmes de frein à fil dans chacun desquels le fil de frein (1a;2a) passe d'un levier de frein (1;2) à travers un tube extérieur (4a,4b;5a,5b) à un frein respectif, et des moyens (8) interconnectent le système de frein de façon que lorsque l'un ou l'autre des leviers de frein est manipulé, l'ensemble du système de frein est actionné, caractérisé en ce que le moyen d'interconnexion comprend :
un relais de tube extérieur (3) inséré entre lesdits tubes extérieurs (4a,4b;5a,5b) pour les systèmes de frein respectifs divise chaque tube extérieur, et les extrémités divisées de chacun desdits tubes extérieurs sont reliées audit relais, et en ce que lesdits fils de frein (1a,2a) sont reliés ensemble en un contact mutuel par des moyens de fixation (8) dans ledit relais de tube extérieur.

2. Dispositif de freinage selon la revendication 1, dans lequel sont prévus deux desdits systèmes de frein actionnables sur les roues avant et arrière respectivement du cycle.

3. Dispositif de freinage selon la revendication 1 ou la revendication 2, dans lequel ledit relais de tube extérieur (3) est une plaque rectangulaire avec des portions d'extrémité opposées (3a) recourbées.

4. Dispositif de freinage selon la revendication 1 ou la revendication 2, dans lequel ledit relais de tube extérieur (3) est en forme de boîte ayant une paroi latérale (3c) s'étendant sensiblement continuellement autour d'une paroi de fond (3b).

5. Dispositif de freinage selon l'une des revendications précédentes, dans lequel lesdits moyens de fixation (8) présentent à l'intérieur une ouverture transversale (8d) dans laquelle lesdits fils de frein (1a,2a) sont situés suivant un contact mutuel et sont serrés.

6. Dispositif de freinage selon l'une des revendications 1 à 4, dans lequel ledit moyen de fixation (8) comprend une paire d'éléments mutuellement filetés (8a,8b) ayant des faces d'extrémité opposées entre lesquelles lesdits fils de frein (1a,2a) sont serrés suivant un contact mutuel en resserrant la connexion filetée entre les éléments.
